# FASCICULE DE BREVET EUROPEEN

(11) **EP 0 967 772 B1**
(45) Date de publication et mention de la délivrance du brevet: **09.11.2005**
(21) Numéro de dépôt: 99401450.4
(22) Date de dépôt: 14.06.1999
(51) Int. Cl.: H04M 1/03, H04R 1/22, H04M 1/60

(54) **Boîtier de téléphone mobile pour usage mains libres**
Telefongehäuse zum Freisprechgebrauch
Telephone housing for handsfree use

(30) Priorité: 22.06.1998 FR 9807832
(43) Date de publication de la demande: 29.12.1999
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Dufosse, Stéphane, 95240 Cormeilles en Parisis (FR)
(74) Mandataire: Feray, Valérie

(56) Documents cités:
- WO-A-97/47117
- GB-A- 1 016 716
- US-A- 5 402 486
- PATENT ABSTRACTS OF JAPAN vol. 010, no. 313 (E-448), 24 octobre 1986 (1986-10-24) & JP 61 123388 A (MATSUSHITA ELECTRIC IND CO LTD), 11 juin 1986 (1986-06-11)

## Description

La présente invention a pour objet un boîtier de téléphone mobile utilisable tant dans un réseau public que dans une installation privée. Plus généralement l'invention peut concerner tous les boîtiers qui diffusent un message sonore et qu'on peut être amené à plaquer contre son oreille.

Les téléphones mobiles connus comportent, pour diffuser des sons, un haut-parleur situé en regard d'une zone perforée d'un bottier. Ce haut-parleur et cette zone sont apportés par l'utilisateur à proximité, et contre son oreille de manière à entendre les messages qu'on lui communique. Compte tenu d'une utilisation envisageable du type à mains libres d'un boîtier de ce type, il est possible de commuter le téléphone mobile de telle façon que le haut-parleur émette le message avec une puissance suffisante pour être entendu à la ronde.

On connaît notamment du Document WO 97/47117 un boîtier de téléphone mobile comportant un haut-parleur monté dans le boîtier et une région perforée se situant en regard du haut-parleur et comportant des perforations) pour transmettre des sons produits par celul-cl à un auditeur aussi bien dans un mode d'écoute privée dans lequel l'auditeur applique son oreille contre le boîtier dans ladite région perforée que dans un mode mains-libres dans lequel l'oreille de l'auditeur est éloignée du boîtier, la partie externe du boîtier formant avec l'oreille de l'auditeur, en mode d'écoute privée, une cavité, le boîtier comprenant un canal acoustique longitudinal présentant une première extrémité étant destinée à déboucher dans ladite cavité) en mode d'écoute privée et présentant une seconde extrémité étant destinée à déboucher à l'air libre en mode d'écoute privée

Ces deux types d'utilisation (mode d'écoute privée et mode mains-libres) présentent des contraintes contradictoires.

En effet, lorsque l'utilisateur a son oreille collée contre le boîtier, pour une écoute personnelle, il apparaît que les composantes basse fréquence des messages écoutés sont trop fortement amplifiées et transmises à cet auditeur. Une norme prévoit ainsi que l'amplitude dans une bande de fréquence audible soit contenue dans un gabarit. Ceci amène à devoir filtrer les composantes basse fréquence pour en réduire l'amplitude. Les filtrages mis en oeuvre le plus souvent sont des filtrages de type électronique nécessitant une interposition d'un filtre de traitement d'un signal avant sa transformation en message audible.

A l'opposé dans l'écoute dite mains libres, des composantes basse fréquence sont nécessaires pour autoriser une diffusion efficace du signal dans un volume important, celui d'un bureau par exemple. Ainsi, d'un usage à un autre, il convient ou non de commuter, de mettre en service, des filtres basse fréquence.

Dans la pratique, le coût des filtres grève le prix de l'appareil.

Par ailleurs, il est connu de créer une fuite acoustique dans la zone perforée du boîtier de manière à amortir les basses fréquences. Cette fuite met ainsi en relation avec l'air libre une cavité formée entre le haut-parleur et contre une face interne du boîtier contre laquelle ce dernier est plaqué. Avec une telle solution, le respect du gabarit de la norme n'est malheureusement pas atteint sans l'adjonction d'un filtre électronique complémentaire.

L'invention a pour objet de remédier à cet inconvénient en proposant une manière complètement différente d'amortir les composantes sonores basse fréquence, selon que l'auditeur colle son oreille contre le boîtier, pour une écoute privée ou selon que celle-ci en est éloignée, pour une écoute à main libre. Dans l'invention dans une zone du boîtier muni de perforations et destinée à se situer en regard du haut-parleur, on place un canal de fuite. Une embouchure de ce canal de fuite est située alors dans une cavité formée par la partie externe du boîtier et l'oreille de l'auditeur (et non plus formée par une face interne du boîtier et une membrane d'un haut-parleur). Un orifice situé à une autre extrémité de ce canal est situé hors de cette zone, à l'air libre. En agissant ainsi, on crée une fuite acoustique ayant un effet favorable d'amortissement sur les composantes basse fréquence. En outre, selon l'invention, cette fuite n'est organisée que dans la mesure où il existe une cavité formée entre le boîtier d'une part et l'oreille de l'auditeur d'autre part. Ceci ne se produit que si l'auditeur écoute avec le boîtier contre son oreille, pour une écoute privée.

L'invention a donc pour objet un boîtier de téléphone mobile tel que défini dans la revendication 1.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figure 1 : la représentation en coupe d'un boîtier conforme à l'invention ;
Figure 2 : la représentation en perspective du même boîtier.

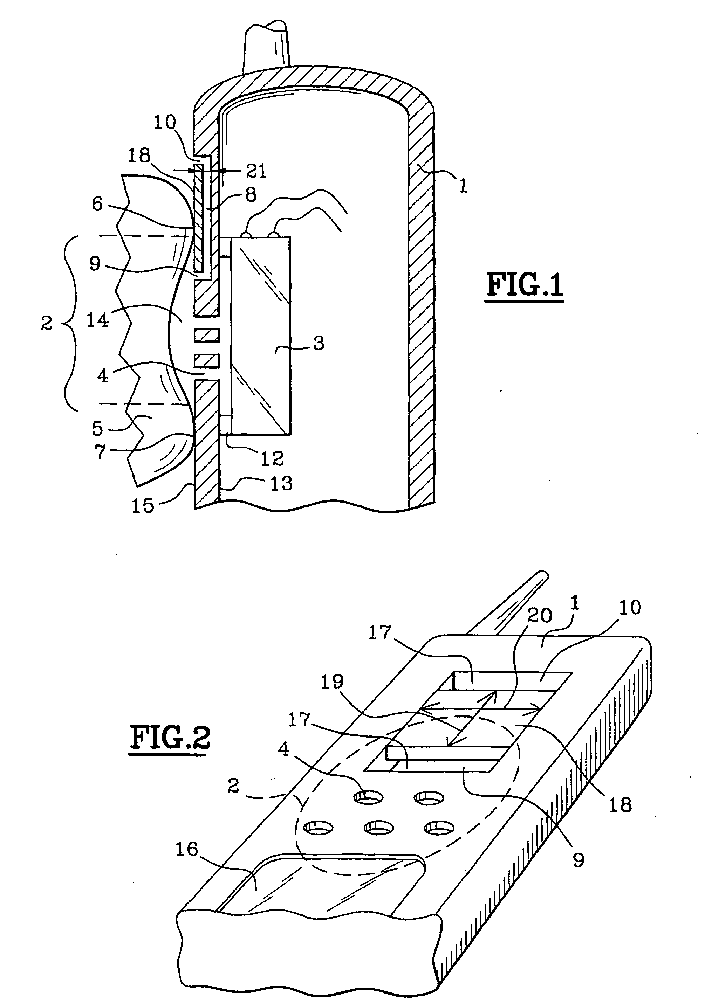

La figure 1 montre en coupe un boîtier 1 d'un téléphone mobile. Ce boîtier 1 comporte une région 2 perforée pour transmettre des sons produits par un haut-parleur 3 du téléphone mobile. Les sons produits par le haut-parleur 3 sont transmis par des perforations 4 à une oreille 5 d'un auditeur. L'oreille 5, lors d'une écoute privée, est plaquée contre le boîtier 1, par exemple à des endroits de contacts 6 et 7 situés de part et d'autre et tout autour de la zone 2. Selon l'invention, la zone 2 possède un canal acoustique 8. Le canal 8 relie une embouchure 9 située sur une face externe du boîtier 1 à un orifice 10. Autant l'embouchure 9 se trouve à l'intérieur de la zone 2, autant l'orifice 10 s'en trouve à l'extérieur, c'est-à-dire à l'extérieur des zones de contacts 6 et 7. Le haut-parleur 3 est pour sa part fixé, notamment par un adhésif circulaire 12, contre la face interne 13 du boîtier 1.

Le fonctionnement de la fuite acoustique par le canal 8 est le suivant. Lorsque l'auditeur plaque son oreille 5 contre le boîtier 1, le canal 8 relie à l'extérieur une cavité 14 formée entre la face externe 15 du boîtier 1 et l'oreille 5 de l'auditeur. Dans ces conditions, il apparaît que le gain dans la bande passante audible est sensiblement réduit pour les basses fréquences tout en étant par ailleurs augmenté pour les hautes fréquences. Dans la bande utile, le gain est alors sensiblement constant, avec une tolérance de plus ou moins 3 dB selon la gamme de fréquences. Il respecte naturellement le gabarit de la norme.

A l'opposé, si l'oreille 5 de l'auditeur n'est pas plaquée contre le boîtier 1, les basses fréquences subissent naturellement une sur-amplification notable, de l'ordre d'une dizaine de dB pour les fréquences comprises entre 300 et 1000 Hz. Dans ces conditions la diffusion en espace libre est automatiquement facilitée.

La figure 2 montre en perspective les mêmes éléments que la figure 1. Le boîtier 1 du téléphone mobile comporte, au-dessus d'un écran 16, la zone 2 montrée en tirets dans laquelle sont aménagés les perforations 4. La figure 2 permet de montrer que le canal 8 est en fait réalisé sous la forme d'une cavité 17 recouverte, entre l'embouchure 9 et l'orifice 10 par une dalle 18. La dalle 18 recouvre imparfaitement la cavité et laisse subsister, de part et d'autre, des ouvertures constituant cette embouchure 9 et cet orifice 10. Le maintien de la dalle 18 au-dessus de la cavité 17 peut être réalisé par collage des chants latéraux de la dalle 18 contre les parois de la cavité, par clipsage, ou par tout autre moyen. En pratique, la dalle 18 a une longueur 19, évaluée comme la distance entre l'embouchure 9 et l'orifice 10, la plus courte possible. Plus cette longueur 19 est courte, plus l'action sur les basses fréquences sera importante. Dans un exemple la longueur 19 est comprise entre 5 et 10 mm.

Une largeur 20 de la dalle 18, mesurée perpendiculairement à la longueur 19, est de l'ordre de 10 mm. Les sections des embouchure 9 et orifice 10 sont de l'ordre de 0,3 à 0,5 mm multiplié par la largeur 20. De même, l'épaisseur 21 du canal 8 est aussi dans un exemple de 0,5 mm. Pour que la cavité 17 n'amoindrisse pas l'épaisseur du boîtier 1, à l'endroit du canal 8, le boîtier 1 peut comporter un décrochement vers l'intérieur du téléphone mobile de façon à ce que sa face apparente externe soit sensiblement plane. L'épaisseur de l'enveloppe de ce boîtier est de l'ordre de 1,5 mm.

La forme de réalisation montrée pour réaliser le canal 8, avec une cavité 17 et une embouchure 9 et un orifice 10 est une forme préférée.

## Revendications

1. Boîtier de téléphone mobile comportant un haut-parleur (3) monté dans le boîtier et une région perforée (2) se situant en regard du haut-parleur (3) et comportant des perforations (4) pour transmettre des sons produits par celui-ci à un auditeur aussi bien dans un mode d'écoute privée dans lequel l'auditeur applique son oreille contre le boîtier dans ladite région perforée que dans un mode mains-libres dans lequel l'oreille de l'auditeur est éloignée du boîtier, la partie externe du boîtier formant avec l'oreille de l'auditeur, en mode d'écoute privée, une cavité (14), le boîtier comprenant un canal acoustique longitudinal (8) présentant une première extrémité (9) étant destinée à déboucher dans ladite cavité (14) en mode d'écoute privée et présentant une seconde extrémité (10) étant destinée à déboucher à l'air libre en mode d'écoute privée, **caractérisé en ce que** ladite première extrémité (9) est distincte des perforations (4) et constitue une embouchure d'entrée dudit canal acoustique longitudinal formant un canal de fuite acoustique depuis ladite cavité (14) vers la seconde extrémité (10) en mode d'écoute privée.

2. Boîtier selon la revendication 1, **caractérisé en ce que** le canal comporte lui-même une cavité (17) réalisée dans l'épaisseur du boîtier et une dalle (18) pour recouvrir imparfaitement cette cavité (17) en laissant subsister une embouchure et un orifice constituant respectivement la première et la seconde extrémités du canal.

3. Boîtier selon la revendication 1 ou 2, **caractérisé en ce que** la face interne du boîtier à l'endroit des perforations (4) adhère (12) audit haut-parleur.

## Patentansprüche

1. Mobiltelefongehäuse mit einem Lautsprecher (3), der in dem Gehäuse befestigt ist, und einem perforierten Bereich (29), der gegenüber dem Lautsprecher (3) angeordnet ist, und welches Perforationen (4) aufweist, um von jenem erzeugte Töne an einen Zuhörer sowohl in einem Normalbetriebmodus, in welchem der Zuhörer sein Ohr gegen das Gehäuse in dem perforierten Bereich hält, als auch in einem Freisprechmodus, in welchem das Ohr des Zuhörers von dem Gehäuse entfernt ist, zu übermitteln, wobei der äußere Teil des Gehäuses mit dem Ohr des Zuhörers im Normalbetriebmodus einen Hohlraum (14) bildet, wobei das Gehäuse einen akustischen Längskanal (8) aufweist, welcher ein erstes Ende (9) aufweist, das dazu bestimmt ist, im Normalbetriebmodus in den Hohlraum (14) zu münden, und ein zweites Ende (10) aufweist, welches dazu bestimmt ist, im Normalbetriebmodus im Freien zu münden, **dadurch gekennzeichnet, dass** das erste Ende (9) von den Perforationen (4) verschieden ist und eine Eingangsmündung des akustischen Längskanals bildet, der einen akustischen Verlustkanal von dem Hohlraum (14) zu seinem zweiten Ende (10) im Normalbetriebmodus bildet.

2. Gehäuse gemäß Anspruch 1, **dadurch gekennzeichnet, dass** der Kanal wiederum einen Hohlraum (17) aufweist, der in der Dicke des Gehäuses ausgebildet ist, und eine Platte (18), um diesen Hohlraum (17) genau abzudecken, indem eine Mündung und eine Öffnung gelassen werden, die jeweils das erste und das zweite Ende des Kanals bilden.

3. Gehäuse gemäß Anspruch 1 oder 2, **dadurch gekennzeichnet, dass** die Innenfläche des Gehäuses am Ort der Perforationen (4) an dem Lautsprecher anklebt (12).

## Claims

1. Casing for mobile telephone comprising a loudspeaker (3) mounted in the casing and a perforated region (2) positioned facing the loudspeaker (3) and comprising perforations (4) to transmit sounds produced by the loudspeaker to the listener both in handset mode in which the listener holds the casing against the ear in said perforated region, and in handsfree mode in which the casing is at a distance from the listener's ear, the outer part of the casing forming a cavity (14) with the listener's ear in handset mode, the casing comprising a longitudinal acoustic channel (8) having a first end (9) intended to open into said cavity (14) in handset mode and having a second end (10) intended to open into open air in handset mode, **characterized in that** said first end (9) is separate from the perforations (4) and forms an inlet mouth for said longitudinal acoustic channel forming an acoustic leak channel, from said cavity (14) towards the second end (10) in handset mode.

2. Casing as in claim 1, **characterized in that** the channel itself comprises a cavity (17) made in the thickness of the casing and a slab (18) to cover this cavity (17) imperfectly, allowing a mouth and an orifice to subsist forming the first and second ends respectively of the channel.

3. Casing as in claim 1 or 2 **characterized in that** the inner face of the casing in the area of the perforations (4) adheres (12) to said loudspeaker.
